# EUROPEAN PATENT APPLICATION

(11) **EP 3 901 907 A1**
(43) Date of publication of application: **27.10.2021**
(21) Application number: 21183013.8
(22) Date of filing: 01.07.2021
(51) Int. Cl.: G06T 7/194

(54) **METHOD AND APPARATUS OF SEGMENTING IMAGE, ELECTRONIC DEVICE AND STORAGE MEDIUM**

(30) Priority: 30.11.2020 CN 202011383926
(71) Applicant: BEIJING BAIDU NETCOM SCIENCE AND TECHNOLOGY CO. LTD., 100085 Beijing (CN)
(72) Inventor: PENG, Mian, Beijing, 100085 (CN); WANG, Jian, Beijing, 100085 (CN); SUN, Hao, Beijing, 100085 (CN); TAN, Xiao, Beijing, 100085 (CN); DING, Errui, Beijing, 100085 (CN)
(74) Representative: Jordan, Volker Otto Wilhelm

(57) **Abstract**

A method and an apparatus of segmenting an image, an electronic device and a storage medium are provided in the present disclosure, which relates to such artificial intelligence as computer vision and deep learning technology. The method of segmenting the image is specifically implemented as follows: acquiring a first segmentation probability map of an input portrait image; detecting a region where a target part of the input portrait image is located, and acquiring a partial image including the target part and corresponding to the region; acquiring a partial segmentation probability map of the region in the first segmentation probability map; segmenting the partial image in accordance with the partial segmentation probability map, to acquire a second segmentation probability map; and combining the first segmentation probability map with the second segmentation probability map, to acquire a segmentation result of the input portrait image. In the present disclosure, the accuracy of image segmentation may be improved.

## Description

### TECHNICAL FIELD

The present disclosure relates to the field of computer technology, in particular to the field of such artificial intelligence as computer vision and deep learning technology.

### BACKGROUND

Along with the development of image processing technology, image segmentation has become more and more widely used. For example, the image segmentation has been applied to portrait image matting. However, conventional main image segmentation technologies include image segmentation performed manually using image processing software and a conventional image segmentation method, such as a nearest neighbor algorithm (k-Nearest Neighbors, KNN) matting technology.

### SUMMARY

A method and an apparatus of segmenting an image, an electronic device and a storage medium are provided in the present disclosure.

According to an aspect of the present disclosure, a method of segmenting an image is provided, including: acquiring a first segmentation probability map of an input portrait image; detecting a region where a target part of the input portrait image is located, and acquiring a partial image including the target part and corresponding to the region; acquiring a partial segmentation probability map of the region in the first segmentation probability map; segmenting the partial image in accordance with the partial segmentation probability map, to acquire a second segmentation probability map; and combining the first segmentation probability map with the second segmentation probability map, to acquire a segmentation result of the input portrait image.

According to another aspect of the present disclosure, an apparatus of segmenting an image is provided, including: a first acquisition module, configured to acquire a first segmentation probability map of an input portrait image; a second acquisition module, configured to detect a region where a target part of the input portrait image is located, and acquire a partial image including the target part and corresponding to the region; a third acquisition module, configured to acquire a partial segmentation probability map of the region in the first segmentation probability map; a segmentation module, configured to segment the partial image in accordance with the partial segmentation probability map, to acquire a second segmentation probability map; and a combination module, configured to combine the first segmentation probability map with the second segmentation probability map, to acquire a segmentation result of the input portrait image.

According to another aspect of the present disclosure, an electronic device is provided, including: at least one processor, and a memory in communication connection with the at least one processor. The memory has stored thereon instructions executable by the at least one processor, and the instructions, when executed by the at least one processor, cause the at least one processor to perform the above-mentioned method.

According to another aspect of the present disclosure, a non-transitory computer-readable storage medium having stored a computer instruction thereon is provided. The computer instruction is executed by a computer to cause the computer to perform the above-mentioned method.

According to the technical solution of the present disclosure, the first segmentation probability map and the second segmentation probability map are combined, so as to acquire the segmentation result of the input portrait image, thereby to improve the accuracy of image segmentation.

It should be appreciated that the content described in this section is not intended to identify key or important features of the embodiments of the present disclosure, nor is it intended to limit the scope of the present disclosure. Other features of the present disclosure are easily understood based on the following description.

### BRIEF DESCRIPTION OF THE DRAWINGS

The accompanying drawings are used for better understanding of solutions, but shall not be construed as limiting the present disclosure. In these drawings,
Fig. 1 is a flowchart illustrating a method of segmenting an image according to the present disclosure;
Fig. 2 is a schematic diagram of an image segmentation according to the present disclosure;
Fig. 3 is a structural diagram of an apparatus of segmenting an image according to the present disclosure; and
Fig. 4 is a block diagram of an electronic device used to implement the method of segmenting the image in the embodiment of the present disclosure.

### DETAILED DESCRIPTION

The following describes exemplary embodiments of the present disclosure with reference to accompanying drawings. Various details of the embodiments of the present disclosure are included to facilitate understanding, and should be considered as being merely exemplary. Therefore, those of ordinary skill in the art should be aware that various changes and modifications may be made to the embodiments described herein without departing from the scope and spirit of the present disclosure. Likewise, for clarity and conciseness, descriptions of well-known functions and structures are omitted below.

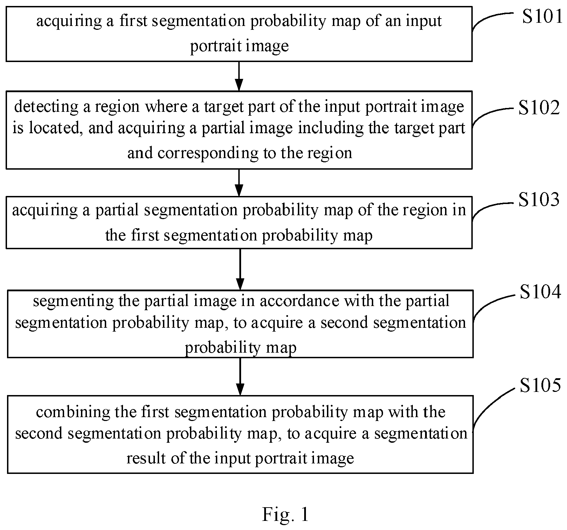

Referring to Fig. 1, which is a flowchart illustrating a method of segmenting an image according to the present disclosure. As shown in Fig. 1, the method includes the following steps.

Step S101, acquiring a first segmentation probability map of an input portrait image.

The input portrait image may be a portrait image captured by a camera, or a portrait image frame extracted from a video.

The first segmentation probability map of the input portrait image may be acquired by encoding and decoding the first segmentation probability map, such as using a segmentation network including an encoder and a decoder. Or, the first segmentation probability map of the input portrait image may be acquired by using a pre-acquired deep neural segmentation network, such as a high-resolution deep neural network (High-Resolution Network, HRNET).

In addition, the segmentation network of the present disclosure may be a segmentation network trained and acquired by using training images and segmentation labels of the training images.

The first segmentation probability map may represent a probability where each pixel in the input portrait image belongs to a target, and the target may be a target that needs to be segmented from the input portrait image.

Step S102, detecting a region where a target part of the input portrait image is located, and acquiring a partial image including the target part and corresponding to the region.

The target part, such as a head, hand, torso, may be predefined.

The region where the target part is located may be detected by using image detection technology. For example, a region where a head is located in the input portrait image may be detected by using a head detection network. Further, the region where the target part of the input portrait image is located may be detected by using a lightweight detection network, so as to increase the speed of the detection of the region. For example, a position of the target part in the input portrait image may be detected by using MobileNet. In the present disclosure, the region where the target part of the input portrait image is located may be detected by using a non-lightweight detection network.

Step S 103, acquiring a partial segmentation probability map of the region in the first segmentation probability map.

When the partial segmentation probability map of the region in the first segmentation probability map is acquired, a probability map of the region in the first segmentation probability image may be used as the partial segmentation probability map. For example, the target part is the head, and a probability map of a head region in the first segmentation probability image is used as the partial segmentation probability map.

It should be appreciated that, since the first segmentation probability map is a segmentation probability map of the input portrait image, a size of the first segmentation probability map is the same as a size of the input portrait image. Therefore, the region in the first segmentation probability map and a region in the input portrait image are a same image region.

Step S104, segmenting the partial image in accordance with the partial segmentation probability map, to acquire a second segmentation probability map.

In this step, the partial image may be segmented by using a pre-trained segmentation network of which inputs include the partial segmentation probability map and the partial image, so as to acquire the second segmentation probability map. The segmentation network may be a segmentation network trained and acquired in accordance with training partial segmentation probability maps, training partial images and segmentation labels of the training partial images. For example, the segmentation network may be an encoder and a decoder, or HRNET, and a loss function of the segmentation network may be a binary loss regression function or another loss regression function.

In this step, since the partial image is segmented in accordance with the first segmentation probability map, as compared with a first segmentation, the accuracy of the image segmentation may be improved.

Step S105, combining the first segmentation probability map with the second segmentation probability map, to acquire a segmentation result of the input portrait image.

When the first segmentation probability map and the second segmentation probability map are combined, it may combine the second segmentation probability map with pixels of the region in the first segmentation probability map, so as to acquire the segmentation result of the input portrait image, such as a head segmentation image of the input portrait image.

In the present disclosure, the first segmentation probability map and the second segmentation probability map may be acquired through the above steps, and then the first segmentation probability map and the second segmentation probability map may be combined, so as to acquire the segmentation result of the input portrait image, thereby to improve the accuracy of the image segmentation. For example, hairline-level accuracy may be achieved during a head segmentation.

It should be appreciated that the method of segmenting the image in the present disclosure may be applied to an electronic device, such as a server, a computer, a mobile phone and a tablet computer. Further, the acquired segmentation result may be applied to such scenario as automatic green screen matting, portrait image background replacement.

In a possible embodiment of the present disclosure, the segmenting the partial image in accordance with the partial segmentation probability map, to acquire the second segmentation probability map includes: generating a trimap of the partial segmentation probability map; and performing segmentation by using the partial image and the trimap as inputs of a first segmentation network, to acquire the second segmentation probability map.

The trimap of the partial segmentation probability map may be generated by using a conventional dilation and erosion method.

The first segmentation network may be a segmentation network of which inputs include the partial image and the trimap, and an output includes a segmentation probability map, such as a segmentation network including an encoder and a decoder, or an HRNET. In addition, the first segmentation network may be a segmentation network trained and acquired in accordance with training partial images, trimaps and segmentation labels of the training partial images. The first segmentation network may be trained on another electronic device, and then configured to the electronic device that implements the method of segmenting the image, which is not particularly defined in the present disclosure.

In this embodiment, the second segmentation probability map is acquired in accordance with the trimap, so as to improve the accuracy of image segmentation.

In a possible embodiment of the present disclosure, the combining the first segmentation probability map with the second segmentation probability map, to acquire the segmentation result of the input portrait image includes: replacing an image content of the region in the first segmentation probability map with an image content of the second segmentation probability map, to acquire the segmentation result of the input portrait image.

The image content of the region in the first segmentation probability map is a probability map of the region where the target part is located in the first segmentation probability map, such as a probability map of the region where the head is located.

In this embodiment, the second segmentation probability map is acquired by segmenting the partial image in accordance with the partial segmentation probability map, which is more accurate as compared with the first segmentation probability map, and the image content of the region in the first segmentation probability map is replaced with the second segmentation probability image, so as to improve the accuracy of the segmentation result.

In a possible embodiment of the present disclosure, the combining the first segmentation probability map with the second segmentation probability map, to acquire the segmentation result of the input portrait image includes: replacing a first image content of the region in the first segmentation probability map with a first image content of the second segmentation probability map, and merging a second image content of the region in the first segmentation probability map with a second image content of the second segmentation probability map, to acquire the segmentation result of the input portrait image, where a position of the first image content of the first segmentation probability map in the region is the same as a position of the first image content of the second segmentation probability map in the second segmentation probability map, and the position of the first image content of the second segmentation probability map in the region is the same as a position of the second image content of the second segmentation probability map in the second segmentation probability map

The first image content of the second segmentation probability map may be an image content in a center region of the second segmentation probability map, which may be specifically pre-defined. The second image content of the second segmentation probability map may be an image content in other regions apart from the center region.

The second image content of the region in the first segmentation probability map may be merged with the second image content of the second segmentation probability map in accordance with their respective preset weights.

In this embodiment, the first image content of the region in the first segmentation probability map is replaced with the first image content of the second segmentation probability map, so as to improve the accuracy of the region segmentation probability map. The second image content of the region in the first segmentation probability map is merged with the second image content of the second segmentation probability map, so that the image content of the region may be smoothly filtered to improve the overall image quality of the segmentation result.

In a possible embodiment of the present disclosure, the first segmentation probability map is a probability map where each pixel in the input portrait image belongs to a body part, the target part is a head, and the first segmentation probability map is a probability map where each pixel in the partial image belongs to the head.

In this embodiment, the first segmentation probability map may represent a probability that each pixel in the input portrait image belongs to a body part, so that the segmentation probability map may be of the pixel-level accuracy, thereby improving the image segmentation effect.

Similarly, the second segmentation probability map may also be a probability map where each pixel in the partial image belongs to a body part.

According to the technical solution of the present disclosure, the first segmentation probability map and the second segmentation probability map are acquired and then combined, so as to acquire the segmentation result of the input portrait image, thereby to improve the accuracy of image segmentation.

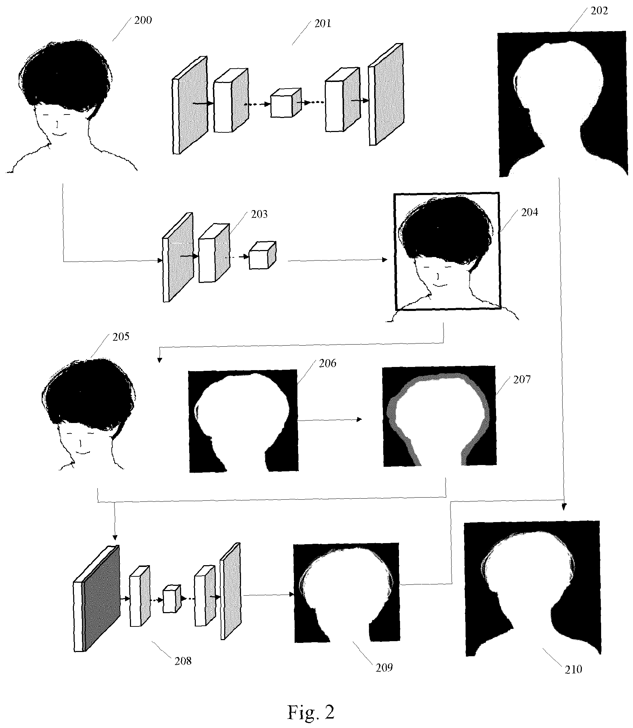

The method of segmenting the image in the present disclosure will be described below by taking the target part being the head as an example. As shown in Fig. 2, an input portrait image 200 is segmented by using a segmentation network 201, so as to acquire a first segmentation probability map 202. A head detection region 204 of the input portrait image 200 may be determined by using a head detection network 203, so as to acquire a head image 205. A partial segmentation probability map 206 of a head region in the first segmentation probability map 202 is acquired, and a trimap 207 of the partial segmentation probability map 206 is generated. Next, image segmentation may be performed by using a segmentation network 208 of which inputs include the head image 205 and the trimap 207, so as to acquire a second segmentation probability map 209. Finally, the first segmentation probability map 202 and the second segmentation probability map 209 are combined, so as to acquire a segmentation result 210 of the input portrait image 200.

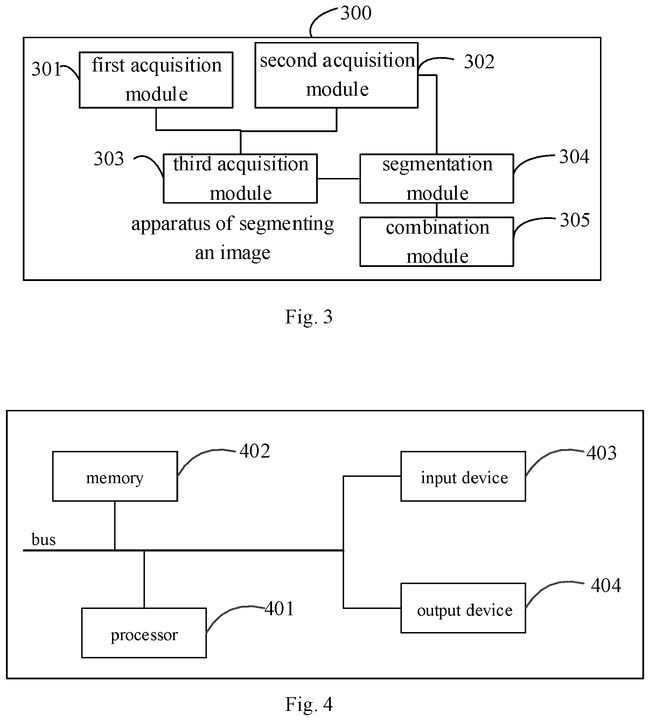

Referring to Fig. 3, which is a structural diagram of an apparatus of segmenting an image according to the present disclosure. As shown in Fig. 3, an apparatus 300 for segmenting an image is provided, including: a first acquisition module 301, configured to acquire a first segmentation probability map of an input portrait image; a second acquisition module 302, configured to detect a region where a target part of the input portrait image is located, and acquire a partial image including the target part and corresponding to the region; a third acquisition module 303, configured to acquire a partial segmentation probability map of the region in the first segmentation probability map; a segmentation module 304, configured to segment the partial image in accordance with the partial segmentation probability map, to acquire a second segmentation probability map; and a combination module 305, configured to combine the first segmentation probability map with the second segmentation probability map, to acquire a segmentation result of the input portrait image.

Optionally, as shown in Fig. 4, the segmentation module 304 includes: a generation unit 3041, configured to generate a trimap of the partial segmentation probability map; and a segmentation unit 3042, configured to perform segmentation by using the partial image and the trimap as inputs of a first segmentation network, to acquire the second segmentation probability map.

Optionally, the combination module 305 is configured to replace an image content of the region in the first segmentation probability map with an image content of the second segmentation probability map, to acquire the segmentation result of the input portrait image; or the combination module 305 is configured to replace a first image content of the region in the first segmentation probability map with a first image content of the second segmentation probability map, and merge a second image content of the region in the first segmentation probability map with a second image content of the second segmentation probability map, to acquire the segmentation result of the input portrait image, where a position of the first image content of the first segmentation probability map in the region is the same as a position of the first image content of the second segmentation probability map in the second segmentation probability map, and the position of the first image content of the second segmentation probability map in the region is the same as a position of the second image content of the second segmentation probability map in the second segmentation probability map.

Optionally, the first segmentation probability map is a probability map where each pixel in the input portrait image belongs to a body part, the target part is a head, and the first segmentation probability map is a probability map where each pixel in the partial image belongs to the head.

The apparatus of segmenting the image is capable of implementing various processes in the embodiment of the method shown in Fig. 1, and achieving the same beneficial effects. In order to avoid repetition, details are not described herein.

According to the embodiments of the present disclosure, an electronic device and non-transitory computer-readable storage medium having stored a computer instruction thereon are further provided.

As shown in Fig. 4, a block diagram of an electronic device for implementing the method of segmenting the image according an embodiment of the present disclosure is shown. The electronic device is intended to represent various forms of digital computers, such as laptop computers, desktop computers, workstations, personal digital assistants, and other suitable computers. The electronic device may also represent various forms of mobile devices, such as personal digital assistant, cellular telephones, smart phones, wearable devices, and other similar computing devices. The components shown herein, their connections and relationships, and their functions are by way of example only and are not intended to limit the implementations of the present disclosure described and/or claimed herein.

As shown in Fig. 4, the electronic device includes: one or more processors 401, a memory 402, and interfaces for connecting various components, including a high-speed interface and a low-speed interface. The various components are interconnected using different buses and may be mounted on a common motherboard or otherwise mounted as desired. The processors may process instructions for execution within the electronic device, including instructions stored in the memory or on the memory to display graphical information of GUI on an external input/output device, such as a display device coupled to the interface. In other embodiments, multiple processors and/or multiple buses may be used with multiple memories, if necessary. Also, multiple electronic devices may be connected, each providing some of the necessary operations (e.g., as an array of servers, a set of blade servers, or a multiprocessor system). In Fig. 4, an example of one processor 401 is illustrated.

The memory 402 is a non-transitory computer-readable storage medium provided herein. The memory has stored thereon instructions executable by the at least one processor to cause the at least one processor to perform the method of segmenting the image in the present disclosure. The non-transitory computer-readable storage medium of the present disclosure has stored thereon computer instructions for causing a computer to perform the method of segmenting the image in the present disclosure.

The memory 402, as a non-transitory computer-readable storage medium, may be used to store non-transitory software programs, non-transitory computer-executable programs, and modules, such as program instructions/modules (e.g., the first acquisition module 301, the second acquisition module 302, the third acquisition module 303, the segmentation module 304 and the combination module 305 shown in Fig. 3) corresponding to the method of segmenting the image in the embodiments of the present the present. By running non-transitory software programs, instructions and modules stored in the memory 402, the processor 401 executes various functional applications and data processing of the server, i.e. implements the method of segmenting the image in the method embodiment described above.

The memory 402 may include a program storage area and a data storage area, where the program storage area may store an operating system, and application programs for at least one function; and the data storage area may store data created according to the use of the electronic device implementing the method of segmenting the image. In addition, the memory 402 may include a high speed random access memory, and may also include a non-transitory memory, such as at least one disk storage device, flash memory device, or other non-transitory solid state memory device. In some embodiments, the memory 402 may alternatively include a memory remotely located with respect to the processor 401, which may be connected via a network to the electronic device implementing the method of segmenting the image. Examples of the network mentioned above include, but are not limited to, the Internet, intranets, local area networks, mobile communication networks, and combinations thereof.

The electronic device implementing the method of segmenting the image may further include: an input device 403 and an output device 404. The processor 401, the memory 402, the input device 403, and the output device 404 may be connected to each other via a bus or in other ways. In Fig. 4, a bus for connection is taken as an example.

The input device 403 may receive input numeric or character information and generate key signal inputs related to user settings and functional controls of the electronic device implementing the method of segmenting the image. For example, the input device may include a touch screen, a keypad, a mouse, a trackpad, a touch pad, a pointing stick, one or more mouse buttons, a trackball, a joystick, etc. The output device 404 may include a display device, an auxiliary lighting device (e.g., LED), a tactile feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuitry, integrated circuit systems, application-specific integrated circuits (ASICs), computer hardware, firmware, software, and/or combinations thereof. These various embodiments may include implementation in one or more computer programs that may be executed and/or interpreted on a programmable system including at least one programmable processor, which may be a dedicated or general purpose programmable processor, that may receive data and instructions from a storage system, at least one input device and at least one output device, and transmit the data and the instructions to the storage system, the at least one input device and the at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide interaction with a user, the systems and techniques described herein may be implemented on a computer having: a display device (e.g., a cathode ray tube (CRT) or liquid crystal display (LCD) monitor) for displaying information to a user; and a keyboard and a pointing device (e.g., a mouse or a trackball) through which a user may provide input to the computer. Other types of devices may also be used to provide interaction with a user; for example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or a computing system that includes any combination of such background components, middleware components, or front-end components. The components of the system may be interconnected by any form or medium of digital data communication (e.g., a communication network). Examples of communication networks include: Local Area Networks (LANs), Wide Area Networks (WANs), and the Internet.

The computer system may include a client and a server. The client and server are typically far away from each other and typically interact through a communication network. The relationship of the client and the server is generated by computer programs running on respective computers and having a client-server relationship with each other.

According to the technical solution of the present disclosure, the first segmentation probability map and the second segmentation probability map are acquired and then combined, so as to acquire the segmentation result of the input portrait image, thereby to improve the accuracy of image segmentation.

It should be appreciated that the various forms of flows described above may be used, and the steps may be reordered, added or deleted. For example, the steps recited in the present disclosure may be performed in parallel or sequentially or may be performed in a different order, so long as the desired results of the technical solutions disclosed in the present disclosure can be achieved, and no limitation is made herein.

The above-described embodiments are not to be construed as limiting the scope of the present disclosure. It will be apparent to those skilled in the art that various modifications, combinations, sub-combinations and substitutions are possible based on design requirements and other factors. Any modifications, equivalents, and improvements within the spirit and principles of the present disclosure shall be included within the protection scope of the present disclosure.

## Claims

1. A method of segmenting an image, comprising:
acquiring a first segmentation probability map of an input portrait image;
detecting a region where a target part of the input portrait image is located, and acquiring a partial image comprising the target part and corresponding to the region;
acquiring a partial segmentation probability map of the region in the first segmentation probability map;
segmenting the partial image in accordance with the partial segmentation probability map, to acquire a second segmentation probability map; and
combining the first segmentation probability map with the second segmentation probability map, to acquire a segmentation result of the input portrait image.

2. The method according to claim 1, wherein the segmenting the partial image in accordance with the partial segmentation probability map, to acquire the second segmentation probability map comprises:
generating a trimap of the partial segmentation probability map; and
performing segmentation by using the partial image and the trimap as inputs of a first segmentation network, to acquire the second segmentation probability map.

3. The method according to claim 1, wherein the combining the first segmentation probability map with the second segmentation probability map, to acquire the segmentation result of the input portrait image comprises:
replacing an image content of the region in the first segmentation probability map with an image content of the second segmentation probability map, to acquire the segmentation result of the input portrait image; or
replacing a first image content of the region in the first segmentation probability map with a first image content of the second segmentation probability map, and merging a second image content of the region in the first segmentation probability map with a second image content of the second segmentation probability map, to acquire the segmentation result of the input portrait image, wherein a position of the first image content of the first segmentation probability map in the region is the same as a position of the first image content of the second segmentation probability map in the second segmentation probability map, and the position of the first image content of the second segmentation probability map in the region is the same as a position of the second image content of the second segmentation probability map in the second segmentation probability map.

4. The method according to claim 1, wherein the first segmentation probability map is a probability map where each pixel in the input portrait image belongs to a body part, the target part is a head, and the first segmentation probability map is a probability map where each pixel in the partial image belongs to the head.

5. An apparatus of segmenting an image, comprising:
a first acquisition module, configured to acquire a first segmentation probability map of an input portrait image;
a second acquisition module, configured to detect a region where a target part of the input portrait image is located, and acquire a partial image comprising the target part and corresponding to the region;
a third acquisition module, configured to acquire a partial segmentation probability map of the region in the first segmentation probability map;
a segmentation module, configured to segment the partial image in accordance with the partial segmentation probability map, to acquire a second segmentation probability map; and
a combination module, configured to combine the first segmentation probability map with the second segmentation probability map, to acquire a segmentation result of the input portrait image.

6. The apparatus according to claim 5, wherein the segmentation module comprises:
a generation unit, configured to generate a trimap of the partial segmentation probability map; and
a segmentation unit, configured to perform segmentation by using the partial image and the trimap as inputs of a first segmentation network, to acquire the second segmentation probability map.

7. The apparatus according to claim 5, wherein the combination module is configured to replace an image content of the region in the first segmentation probability map with an image content of the second segmentation probability map, to acquire the segmentation result of the input portrait image; or
the combination module is configured to replace a first image content of the region in the first segmentation probability map with a first image content of the second segmentation probability map, and merge a second image content of the region in the first segmentation probability map with a second image content of the second segmentation probability map, to acquire the segmentation result of the input portrait image, wherein a position of the first image content of the first segmentation probability map in the region is the same as a position of the first image content of the second segmentation probability map in the second segmentation probability map, and the position of the first image content of the second segmentation probability map in the region is the same as a position of the second image content of the second segmentation probability map in the second segmentation probability map.

8. The apparatus according to claim 5, wherein the first segmentation probability map is a probability map where each pixel in the input portrait image belongs to a body part, the target part is a head, and the first segmentation probability map is a probability map where each pixel in the partial image belongs to the head.

9. An electronic device, comprising:
at least one processor; and
a storage communicatively connected to the at least one processor,
wherein the storage stores therein an instruction configured to be executed by the at least one processor, and the at least one processor is configured to execute the instruction, to implement the method according to any one of claims 1-4.

10. A non-transitory computer readable storage medium, storing therein a computer instruction, wherein the computer instruction is configured to be executed by a computer, to implement the method according to any one of claims 1-4.

11. A computer program product, comprising a computer program, wherein the computer program is configured to be executed by a processor, to implement the method according to any one of claims 1-4.
